# EUROPEAN PATENT APPLICATION

(11) **EP 4 657 644 A1**
(43) Date of publication of application: **03.12.2025**
(21) Application number: 24854441.3
(22) Date of filing: 12.08.2024
(51) Int. Cl.: H01M 50/533, H01M 50/538, H01M 10/04, H01M 50/107, H01M 50/179, H01M 50/186, H01M 50/167, H01M 50/213, H01M 50/249

(54) **ELECTRODE ASSEMBLY, CYLINDRICAL BATTERY, AND BATTERY PACK AND VEHICLE INCLUDING SAME**

(30) Priority: 11.08.2023 KR 20230105883
(71) Applicant: LG Energy Solution, Ltd., Seoul 07335 (KR)
(72) Inventor: SON, Jong-In, Daejeon 34122 (KR); KIM, Young-Gon, Daejeon 34122 (KR); KIM, Eun-Sae, Daejeon 34122 (KR); LEE, So-Ra, Daejeon 34122 (KR); JANG, Kyung-Min, Daejeon 34122 (KR)
(74) Representative: Goddar, Heinz J.
(86) International application number: PCT/KR2024/012020
(87) International publication number: WO 2025/037890

(57) **Abstract**

Disclosed is an electrode assembly, a cylindrical battery, and a battery pack and a vehicle including the same. The electrode assembly includes a first electrode, a second electrode, and a separator interposed therebetween, which are wound around one axis to define a core and an outer circumference. At least one of the first electrode and the second electrode includes an uncoated portion extending in a winding direction along a long side end thereof. The uncoated portion includes a plurality of segments separated by cut grooves formed along the winding direction and independently bendable. The plurality of segments are bent toward the core to form a bending surface area at one end of the electrode assembly. At least some of the plurality of segments include a folded end portion.

## Description

### TECHNICAL FIELD

The present disclosure relates to an electrode assembly, a cylindrical battery, and a battery pack and a vehicle including the same.

The present application claims priority to Korean Patent Application No. 10-2023-0105883 filed on August 11, 2023, and Korean Patent Application No. 10-2024-0107867 filed on August 12, 2024, in the Republic of Korea, the disclosures of which are incorporated herein by reference.

### BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no by-products are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. The battery housing is called a battery can in the art. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 (diameter: 18 mm, height: 65 mm) or a form factor 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

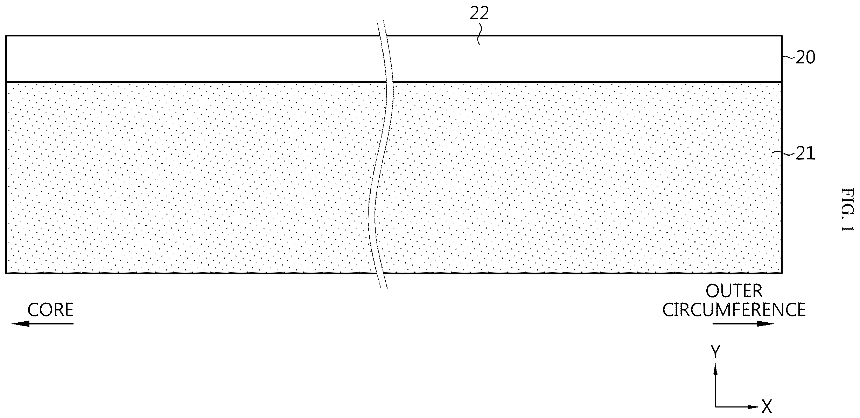

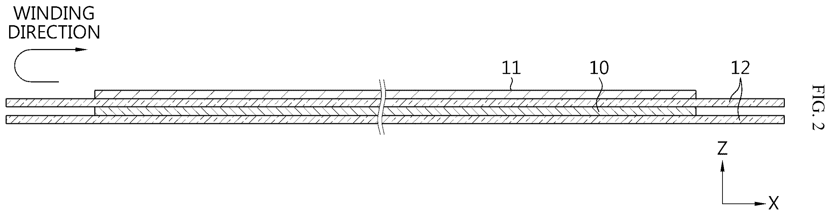

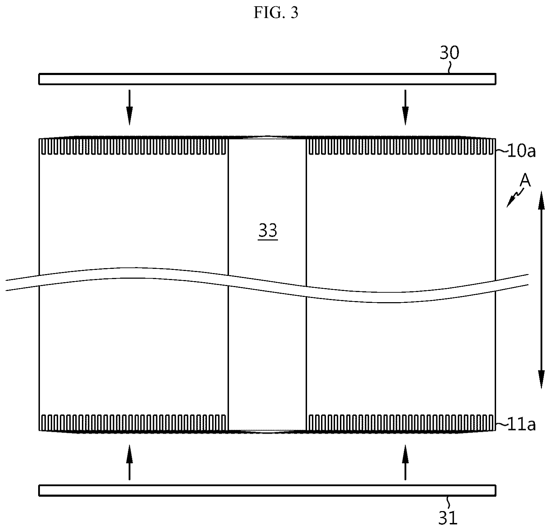

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bending surface area of an uncoated portion.

Referring to FIGS. 1 to 3, a positive electrode 10 and a negative electrode 11 have a structure in which a sheet-shaped current collector 20 is coated with an active material layer 21, and include an uncoated portion 22 at one long side along the winding direction X. The long side refers to a side with relatively long length in a direction parallel to the X-axis direction.

An electrode assembly A is manufactured by sequentially stacking the positive electrode 10 and the negative electrode 11 together with two sheets of separators 12 as shown in FIG. 2 and then winding them in one direction X based on one axis of the core 33. The stacking order of the positive electrode 10 and the negative electrode 11 may be opposite to that shown in the drawings. The uncoated portions of the positive electrode 10 and the negative electrode 11 are arranged in opposite directions.

After the winding process, the uncoated portion 10a of the positive electrode 10 and the uncoated portion 11a of the negative electrode 11 are bent toward the core. After that, current collectors 30, 31 are welded and coupled to the uncoated portions 10a, 11a, respectively.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

Meanwhile, the bending portion of the uncoated portion 10a, 11a to which the current collector 30, 31 is welded is overlapped in multiple layers as illustrated in FIG. 3. Therefore, the bending surface area formed when the uncoated portion 10a, 11a is bent has almost no gap through which the electrolyte can pass in the winding axis direction. This is because most of the gaps between the winding turns that have existed immediately after winding disappear during the bending process of the uncoated portion 10a, 11a. Therefore, the conventional electrode assembly manufactured to have a tab-less structure has a disadvantage of a slow electrolyte impregnation speed. This is because the bending surface area does not have a sufficient gap through which the electrolyte can move into the interior of the electrode assembly.

### DISCLOSURE

### Technical Problem

The present disclosure is designed to solve the problems of the related art, and therefore the present disclosure is directed to providing an electrode assembly having a tab-less structure in which an uncoated portion of an electrode has an improved structure so that a gap through which electrolyte may be impregnated into an electrode assembly is sufficiently formed in a bending surface area of the uncoated portion.

The present disclosure is also directed to providing a battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.

### Technical Solution

In one aspect of the present disclosure, there is provided an electrode assembly in which a first electrode, a second electrode, and a separator interposed therebetween are wound around one axis to define a core and an outer circumference, wherein at least one of the first electrode and the second electrode includes an uncoated portion extending in a winding direction along a long side end thereof, wherein the uncoated portion includes a plurality of segments separated by cut grooves formed along the winding direction and independently bendable, wherein the plurality of segments are bent toward the core to form a bending surface area at one end of the electrode assembly, and wherein at least some of the plurality of segments include a folded end portion.

In the present disclosure, a segment including the folded end portion is defined as an end-folded segment, and the number of uncoated portions intersecting an imaginary straight line passing through a center of the folded end portion is defined as the number of folds of the folded end portion.

The bending surface area may include a plurality of end-folded segments.

The folded end portion may have the number of folds of 2 or more and form a gap between segments adjacent in a radial direction of the electrode assembly.

The gap may have a separation distance corresponding to a thickness of the folded end portion between the segments adjacent in the radial direction of the electrode assembly.

The plurality of end-folded segments may be arranged in a regular or irregular pattern along the radial direction or a circumferential direction of the electrode assembly on the bending surface area.

The bending surface area may include a radial region in which the number of end-folded segments arranged in a circumferential direction increases stepwise or gradually from the core to the outer circumference.

The bending surface area may include a radial region in which the number of folds of the folded end portion increases stepwise or gradually from the core to the outer circumference.

The bending surface area may include a radial region in which the number of folds of the folded end portion is maintained uniform from the core to the outer circumference.

Heights of the plurality of end-folded segments may increase stepwise from the core to the outer circumference of the electrode assembly. In this case, the bending surface area may include a radial region in which the number of folds of the folded end portion also increases as the height of the end-folded segment increases.

The bending surface area may include a radial region in which a width of the uncoated portion in the one axis direction forming the folded end portion increases stepwise or gradually from the core to the outer circumference of the electrode assembly.

In the present disclosure, the number of uncoated portions intersecting an imaginary line passing through the bending surface area in parallel with the one axis direction at any point of the bending surface area is defined as a stack number of an uncoated portion at the corresponding point.

The bending surface area may include a stack number increase region and a stack number uniform region.

The stack number increase region may be positioned closer to the outer circumference of the electrode assembly, and the stack number uniform region may be positioned between the stack number increase region and the core of the electrode assembly.

The number of end-folded segments included in the stack number increase region may be greater than the number of end-folded segments included in the stack number uniform region.

The number of folds of the folded end portion included in the stack number uniform region may be greater than the number of folds of the folded end portion included in the stack number increase region.

The folded end portion may have a structure folded in a jelly-roll shape, a structure folded in a zigzag shape, or a structure folded randomly.

In another aspect of the present disclosure, there is also provided a cylindrical battery comprising: an electrode assembly in which a first electrode, a second electrode, and a separator interposed therebetween are wound around one axis to define a core and an outer circumference, the electrode assembly including at least one of the above-described features; a battery housing having an open end and a closed end and configured to accommodate the electrode assembly through the open end, the battery housing being electrically connected to the second electrode of the electrode assembly; a sealing body configured to seal the open end of the battery housing; and a terminal electrically connected to the first electrode of the electrode assembly and having a surface exposed to an outside of the battery housing.

The bending surface area may be formed by bending the plurality of segments included in the uncoated portion of the first electrode.

The cylindrical battery may further comprise a first current collection plate that electrically connects the bending surface area formed by the uncoated portion of the first electrode and the terminal.

The terminal may be installed in a perforation hole formed in the closed end of the battery housing to be insulated from the battery housing. A gasket may be interposed between the terminal and the perforation hole.

The terminal may include a terminal exposing portion exposed through an outer surface of the closed end, and a terminal insert portion extending from the terminal exposing portion and inserted into the battery housing through the perforation hole.

A lower edge of the terminal insert portion may be riveted toward an inner surface of the closed end.

The sealing body may include a cap plate that seals the open end of the battery housing.

A gasket may be interposed between an edge of the cap plate and the open end of the battery housing.

The terminal may be the cap plate.

The bending surface area may be formed by bending the plurality of segments included in the uncoated portion of the second electrode.

The cylindrical battery may further comprise a second current collection plate that electrically connects the bending surface area formed by the uncoated portion of the second electrode and a sidewall of the battery housing.

The battery housing may include a beading portion formed by pressing inward an outer circumference near the open end.

An edge of the second current collection plate may be interposed between the gasket and the sidewall of the battery housing.

The edge of the second current collection plate may be in contact with the sidewall of the battery housing, for example the beading portion.

If the sidewall of the battery housing does not include a beading portion, the sidewall may extend in a straight line between the closed end and the open end. In this case, the edge of the cap plate may be welded to the open end.

At least a part of the second current collection plate may be welded to the cap plate.

The second current collection plate may be electrically connected to the cap plate.

At least an inner region of an edge portion of the cap plate may be welded to the bending surface area formed by the uncoated portion of the second electrode facing the cap plate. In this case, the cap plate may replace the function of the second current collection plate.

In still another aspect of the present disclosure, there is also provided a battery pack comprising a plurality of cylindrical batteries described above.

In still another aspect of the present disclosure, there is also provided a vehicle comprising the battery pack.

### Advantageous Effects

According to the present disclosure, by improving the end structure of the segments, gaps used as a path for electrolyte impregnation may be sufficiently formed in the bending surface area formed by bending the segments in the radial and/or circumferential direction, thereby shortening the impregnation time of the electrolyte.

According to another aspect of the present disclosure, it is possible to provide a cylindrical battery including an electrode assembly having improved electrolyte impregnation, low internal resistance, and improved welding strength between the current collector and the uncoated portion, and a battery pack and a vehicle including the same.

In addition, the present disclosure may have several other effects, and such effects will be described in each embodiment, or any description that can be easily inferred by a person skilled in the art will be omitted for an effect.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for manufacturing a conventional tab-less cylindrical battery.
FIG. 2 is a diagram showing an electrode winding process of the conventional tab-less cylindrical battery.
FIG. 3 is a diagram showing a process of welding a current collector to a bending surface area of an uncoated portion in the conventional tab-less cylindrical battery.
FIG. 4 is a plan view showing a structure of an electrode according to an embodiment of the present disclosure.
FIG. 5 is a plan view exemplarily showing an electrode structure including a plurality of end-folded segments according to an embodiment of the present disclosure.
FIG. 6 is a drawing showing a cross-sectional structure of a folded end portion along line A-A' of FIG. 5.
FIG. 7 is a drawing showing another cross-sectional structure of the folded end portion along line A-A' of FIG. 5.
FIG. 8 is a drawing showing still another cross-sectional structure of the folded end portion along line A-A' of FIG. 5.
FIG. 9 is a drawing showing still another cross-sectional structure of the folded end portion along line A-A' of FIG. 5.
FIG. 10a is a perspective view showing the upper structure of an electrode assembly in which a bending surface area is formed according to an embodiment of the present disclosure.
FIG. 10b is a plan view schematically indicating the location of the folded end portion on the bending surface area according to an embodiment of the present disclosure with a dotted box.
FIG. 10c is a cross-sectional view showing a part of the bending surface area according to an embodiment of the present disclosure, taken along a winding axis direction of the electrode assembly.
FIG. 11 is a cross-sectional view showing a jelly-roll type electrode assembly in which the electrode according to an embodiment of the present disclosure is applied to a first electrode (positive electrode) and a second electrode (negative electrode), taken along the winding axis direction Y.
FIG. 12 is a cross-sectional view showing a cylindrical battery according to an embodiment of the present disclosure, taken along the winding axis direction Y.
FIG. 13 is a cross-sectional view showing a cylindrical battery according to another embodiment of the present disclosure, taken along the winding axis direction Y.
FIG. 14 is a diagram schematically showing a battery pack according to an embodiment of the present disclosure.
FIG. 15 is a diagram schematically showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Also, to aid understanding of the present disclosure, the attached drawings are not drawn to scale and the dimensions of some components may be exaggerated. In addition, the same reference symbols may be assigned to the same components in different embodiments.

Stating that two objects of comparison are 'the same' means that they are 'substantially the same'. Therefore, the term 'substantially the same' may include a deviation that is considered low in the art, for example, a deviation of less than 10%. Also, uniformity of a parameter in a region may mean that the parameter is uniform from an average perspective in the corresponding region.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

First, an electrode assembly according to an embodiment of the present disclosure is described. The electrode assembly may be a jelly-roll type electrode assembly having a structure in which a first electrode and a second electrode having a sheet shape and a separator interposed therebetween are wound in one direction.

At least one of the first electrode and the second electrode includes an uncoated portion not coated with an active material at a long side end in the winding direction. At least a part of the uncoated portion is itself used as an electrode tab. The uncoated portion includes a core side uncoated portion adjacent to the core of the electrode assembly, an outer circumference side uncoated portion adjacent to the outer circumference of the electrode assembly, and an intermediate uncoated portion sandwiched between the core side uncoated portion and the outer circumference side uncoated portion.

Preferably, at least one of the core side uncoated portion and the outer circumference side uncoated portion has a relatively lower height than the intermediate uncoated portion.

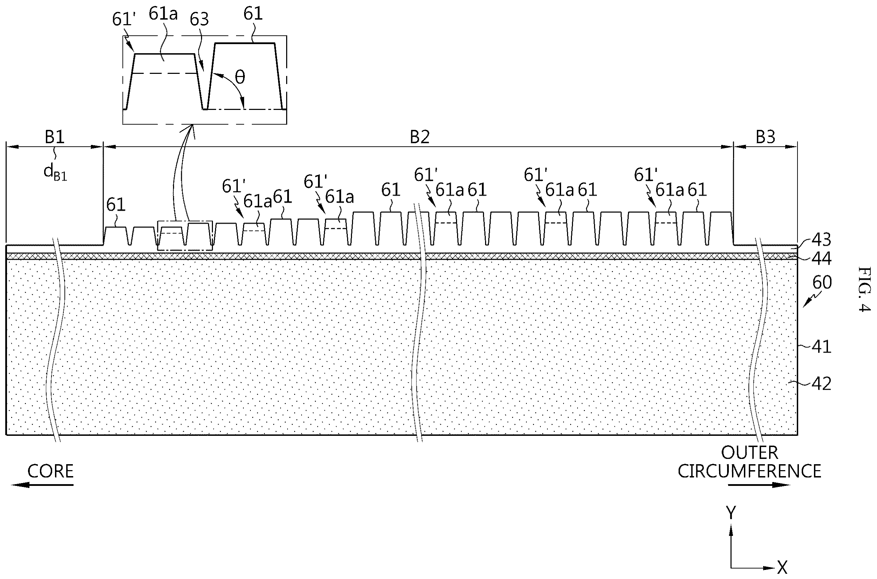

FIG. 4 is a plan view showing a structure of an electrode 60 according to an embodiment of the present disclosure.

Referring to FIG. 4, the electrode 60 of this embodiment includes a current collector 41 made of metal foil and an active material layer 42. The metal foil may be a conductive metal such as aluminum or copper, and is appropriately selected according to the polarity of the electrode 60. The active material layer 42 is formed on at least one surface of the current collector 41. The active material layer 42 is formed along the winding direction X. The electrode 60 includes an uncoated portion 43 at the long side end in the winding direction X. The uncoated portion 43 is a partial area of the current collector 41 not coated with the active material.

In the electrode 60, the width of the active material portion in the short side direction of the current collector 41 may be 50 mm to 120 mm, and the length of the active material portion in the long side direction of the current collector 41 may be 3 m to 5 m.

Preferably, an insulating coating layer 44 may be formed at a boundary between the active material layer 42 and the uncoated portion 43. The insulating coating layer 44 is formed such that at least a part thereof overlaps with the boundary between the active material layer 42 and the uncoated portion 43. The insulating coating layer 44 prevents a short circuit between two electrodes having different polarities and facing each other with a separator interposed therebetween. The insulating coating layer 44 may cover a boundary between the active material layer 42 and the uncoated portion 43 with a width of 0.3 mm to 5 mm. The insulating coating layer 44 may include a polymer resin and an inorganic filler such as SiO₂ and Al₂O₃. Since the portion of the current collector 41 covered by the insulating coating layer 44 is not an area coated with an active material layer, it may be regarded as an uncoated portion.

The uncoated portion 43 includes a core side uncoated portion B1 adjacent to the core of the electrode assembly, an outer circumference side uncoated portion B3 adjacent to the outer circumference of the electrode assembly, and an intermediate uncoated portion B2 interposed between the core side uncoated portion B1 and the outer circumference side uncoated portion B3.

The core side uncoated portion B1, the outer circumference side uncoated portion B3, and the intermediate uncoated portion B3 may be defined as an uncoated portion in an area adjacent to the core, an uncoated portion in an area adjacent to the outer circumference, and an uncoated portion of the remaining area other than the above areas, respectively, when the electrode 60 is wound into a jelly-roll type electrode assembly.

Hereinafter, the core side uncoated portion B1, the outer circumference side uncoated portion B3, and the intermediate uncoated portion B2 are referred to as a first portion, a second portion, and a third portion, respectively.

In one example, the first portion B1 may be an uncoated portion of an electrode region including the innermost winding turn, and the second portion B3 may be an uncoated portion of an electrode region including the outermost winding turn. The winding turn may be counted based on the core-side end of the electrode assembly.

In another example, the boundary of B1/B2 may be appropriately defined as a point at which the height (or, change pattern) of the uncoated portion substantially changes while going from the core of the electrode assembly toward the outer circumference, or a point of a predetermined % based on the radius of the electrode assembly (e.g., 5% point, 10% point, 15% point, or the like of the radius)

The boundary of B2/B3 may be defined as a point at which the height (or, change pattern) of the uncoated portion substantially changes as going from the outer circumference of the electrode assembly toward the core, or a point of a predetermined % based on the radius of the electrode assembly (e.g., 85% point, 90% point, 95% point, or the like of the radius). When the boundary of B1/B2 and the boundary of B2/B3 are specified, the third portion B2 may be automatically specified.

If only the boundary of B1/B2 is specified, the boundary of B2/B3 may be appropriately selected at a point near the outer circumference of the electrode assembly. In one example, the second portion may be defined as an uncoated portion of an area of the electrode constituting the outermost winding turn. Conversely, when only the boundary of B2/B3 is specified, the boundary of B1/B2 may be appropriately selected at a point near the core of the electrode assembly. In one example, the first portion B1 may be defined as an uncoated portion of an area of the electrode constituting the innermost winding turn.

It is not excluded that another structure is interposed between the first portion B1 and the third portion B2. Also, it is not excluded that another structure is interposed between the third portion B2 and the second portion B3.

In the electrode 60, the heights of the first portion B1 and the second portion B3 are 0 or more, but are relatively smaller than the third portion B2. Also, the heights of the first portion B1 and the second portion B3 may be the same or different. In the winding direction, the third portion B2 is longer than the first portion B1 and the second portion B3.

The width (d_{B1}) of the first portion B1 is designed by applying the condition that the core of the electrode assembly is not covered when the uncoated portion of the third portion B2 is bent toward the core. The core means a cavity existing at the winding center of the electrode assembly. The width (d_{B1}) of the first portion B1 may increase in proportion to the bending length of the uncoated portion most adjacent to the core. The width (d_{B1}) of the first portion B1 may be set as 180 mm to 350 mm depending on the diameter of the core of the electrode assembly and the bending length of the uncoated portion most adjacent to the core.

The uncoated portion of the third portion B2 may include a plurality of segments 61 separated by a cut groove 63 formed along the winding direction X and independently bendable.

The heights of the plurality of segments 61 may increase stepwise from the core toward the outer circumference. Alternatively, the plurality of segments 61 may have the same height from the core toward the outer circumference.

The plurality of segments 61 have a geometric shape in which the width decreases from the bottom to the top. The geometric figure may be a trapezoid. The shape of the geometric figure may be modified to various forms such as rectangle, equilibrium quadrilateral and so on.

The segment 61 may be formed by laser notching. A cut groove 63 is formed between the segments 61 along the winding direction X. When the shape of the segment 61 is a rectangle or a trapezoid, the cut groove 63 may have a line shape. The plurality of segments 61 may be formed by a known metal foil cutting process such as ultrasonic cutting or punching.

At least some of the plurality of segments 61 may include a folded end portion 61a.

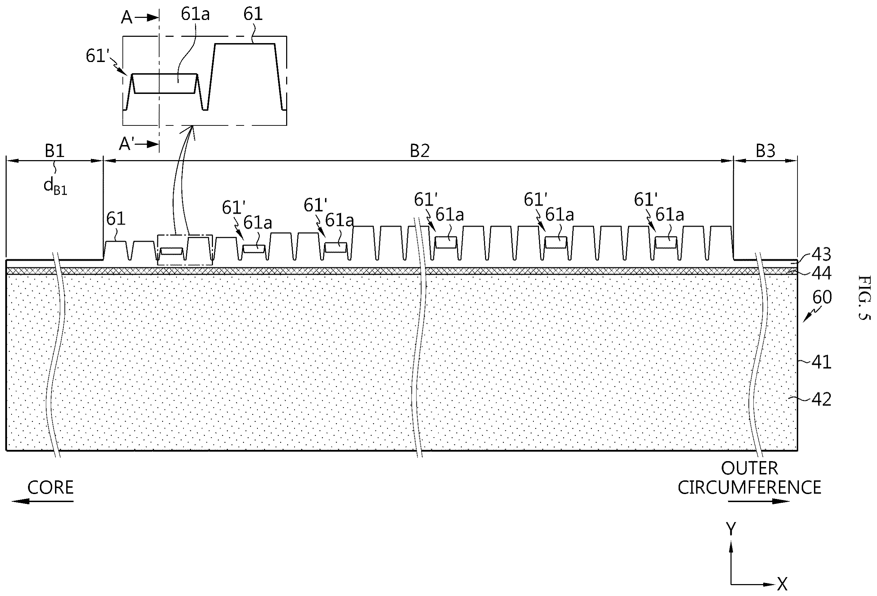

FIG. 5 is a plan view exemplarily showing the structure of an electrode 60 including a plurality of end-folded segments 61' according to an embodiment of the present disclosure.

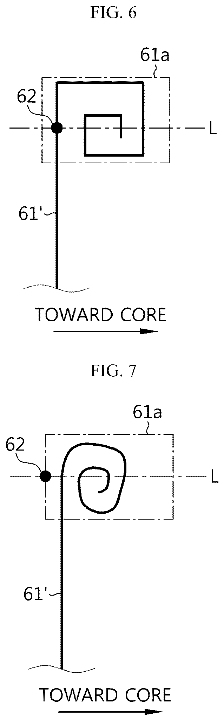

FIGS. 6 to 9 are drawings showing various cross-sectional structures of the folded end portion along line A-A' of FIG. 5.

Referring to FIGS. 4 to 9 together, the folded end portion 61a is formed only in a part of the plurality of segments 61. The segment 61 including the folded end portion 61a is defined as an end-folded segment 61'. The folded end portion 61a is formed by folding an end of the end-folded segment 61' at least once. The part of the end-folded segment 61' forming the folded end portion 61a is an area above the dotted line (see FIG. 4). In FIG. 4, the folded end portion 61a is in a state before being folded.

In the end-folded segment 61', the width of the part forming the folded end portion 61a may be the same or different. Here, the width is the width in the winding axis direction Y.

In the end-folded segment 61', the width of the part forming the folded end portion 61a may increase or decrease stepwise or gradually from the core to the outer circumference of the electrode assembly.

In the end-folded segment 61', the width of the part forming the folded end portion 61a may vary irregularly from the core of the electrode assembly to the outer circumference.

The folded end portion 61a may have a jelly-roll structure wound in a straight shape as shown in FIG. 6. The folded end portion 61a may be arranged to face the core of the electrode assembly. Unlike the illustrated example, the folded end portion 61a may be arranged to face the outer circumference of the electrode assembly.

In another example, the folded shape of the folded end portion 61a may have a jelly-roll structure wound in an arc shape as shown in FIG. 7. The folded end portion 61a may be arranged to face the core of the electrode assembly. Unlike the illustrated example, the folded end portion 61a may be arranged to face the outer circumference of the electrode assembly.

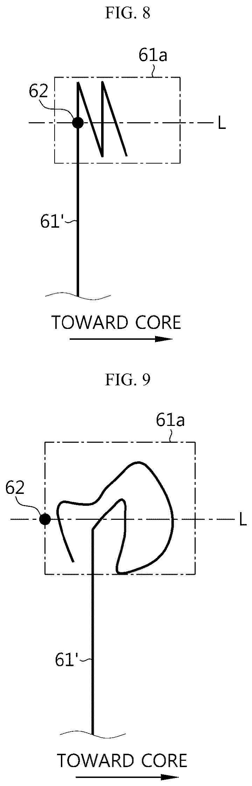

In still another example, the folded shape of the folded end portion 61a may have a structure folded in a zigzag shape as shown in FIG. 8. The folded end portion 61a may be arranged to face the core of the electrode assembly. Unlike the illustrated example, the folded end portion 61a may be arranged to face the outer circumference of the electrode assembly.

In still another example, the folded shape of the folded end portion 61a may have a randomly folded structure as shown in FIG. 9. In this case, a part of the folded end portion 61a may be arranged to face the core of the electrode assembly, and another part of the folded end portion 61a may be arranged to face the outer circumference of the electrode assembly.

The number of folds may be defined for the folded end portion 61a.

As illustrated in FIGS. 6 to 9, the number of folds may be the number of uncoated portions intersecting an imaginary straight line L passing through the center 62 of the folded end portion 61a. The imaginary straight line L may be substantially perpendicular to a part of the uncoated portion excluding the folded end portion 61a. The center 62 of the folded end portion 61a may be a center of gravity of a projected portion when the folded end portion 61a is projected onto a predetermined plane. The plane on which the folded end portion 61a is projected may be a plane on which the end-folded segment 61' exists. The number of folds of the folded end portion 61a included in the end-folded segment 61' illustrated in FIGS. 6 to 9 is 4. If the structure of the folded end portion 61a changes, the number of folds may also change.

When the electrode 60 is included as an electrode of an electrode assembly having a jelly-roll structure, the plurality of segments 61 and the plurality of end-folded segments 61' may extend and protrude to the outside of the separator along the winding axis direction Y of the electrode assembly.

The plurality of segments 61 and the plurality of end-folded segments 61' may be bent in a radial direction of the electrode assembly, for example toward the core, to form a bending surface area at one end of the electrode assembly. The bending point may be near the lower end of the cut groove 63. The bending point may be spaced upward by a distance of 1 mm or less based on the lower end of the cut groove 63. The bending surface area is approximately perpendicular to the winding axis direction Y.

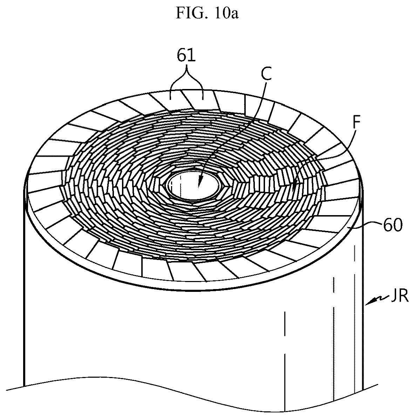

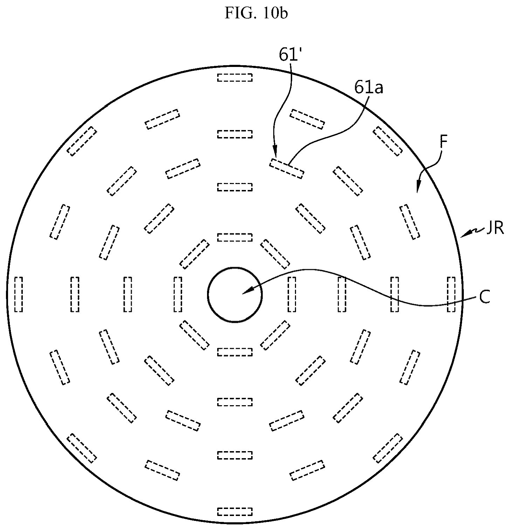

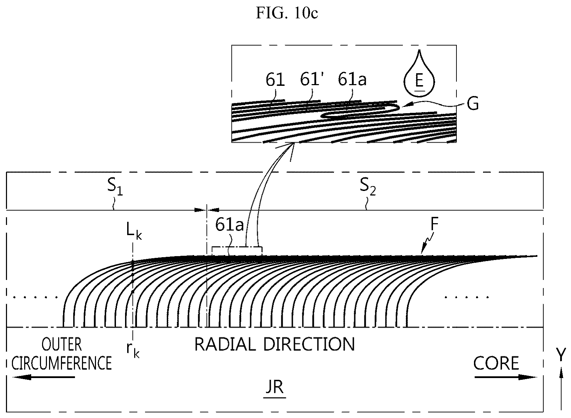

FIG. 10a is a perspective view showing the upper structure of the electrode assembly JR in which the bending surface area F is formed according to an embodiment of the present disclosure. FIG. 10b is a plan view schematically indicating the position of the folded end portion 61a on the bending surface area F with a dotted box. In FIG. 10b, the structure in which the segment 61 and the end-folded segment 61' overlap in the radial direction is not shown. FIG. 10c is a cross-sectional view showing a part of the bending surface area F taken along the winding axis direction Y of the electrode assembly JR.

Referring to FIG. 10a, 10b, and 10c, the folded end portion 61a included in the end-folded segment 61' has the number of folds of 2 or more and may form a gap G between segments 61 adjacent in the radial direction of the electrode assembly JR. The gap G may provide a path for the electrolyte E to be impregnated into the interior of the electrode assembly JR. Since a plurality of gaps G are formed by the plurality of end-folded segments 61' in the bending surface area F, the impregnation speed of the electrolyte may be increased. As a result, the electrolyte injection time may be shortened.

The gap G may have a separation distance corresponding to the thickness of the folded end portion 61a between the segments 61 adjacent in the radial direction of the electrode assembly JR. The thickness of the folded end portion 61a may be defined as a maximum value among the thicknesses measured at multiple points of the folded end portion 61a. As the number of folds of the folded end portion 61a increases, the separation distance of the gap G increases, and the impregnation speed of the electrolyte may be improved accordingly.

Referring to FIG. 10b, the plurality of end-folded segments 61' may be arranged in a regular or irregular pattern along the radial direction or circumferential direction of the electrode assembly JR on the bending surface area F.

In another aspect, the bending surface area F may include a radial region in which the number of end-folded segments 61' arranged in the circumferential direction increases stepwise or gradually from the core C of the electrode assembly JR to the outer circumference.

In still another aspect, the bending surface area F may include a radial region in which the number of folds of the folded end portion 61a increases stepwise or gradually from the core C of the electrode assembly JR to the outer circumference. That is, in the radial region, the number of folds of the folded end portion 61a positioned closer to the core C may be smaller than the number of folds of the folded end portion 61a positioned closer to the outer circumference.

In still another aspect, the bending surface area F may include a radial region in which the number of folds of the folded end portion 61a is maintained uniform from the core C of the electrode assembly JR to the outer circumference. That is, in the radial region, the number of folds of the folded end portion 61a may be the same.

In still another aspect, the end-folded segments 61' may have heights that gradually increase from the core C of the electrode assembly JR to the outer circumference (see FIG. 4). In this case, the bending surface area F may include a radial region in which the number of folds of the folded end portion 61a also increases as the height of the end-folded segment 61' increases. That is, in the radial region, the number of folds of the folded end portion 61a included in the end-folded segment 61' having a relatively low height may be smaller than the number of folds of the folded end portion 61a included in the end-folded segment 61' having a relatively high height.

In still another aspect, the bending surface area F may include a radial region in which the width of the uncoated portion in the winding axis direction Y forming the folded end portion 61a increases stepwise or gradually from the core C of the electrode assembly JR to the outer circumference.

According to the above embodiments, the electrolyte impregnation rate may be improved by relatively increasing the number of end-folded segments 61' and/or the number of folds of the folded end portion 61a arranged in the radial region of the bending surface area F where the electrolyte impregnation rate is low.

Referring to FIG. 10c, when an imaginary straight line (Lₖ) is drawn parallel to the winding axis direction Y at any point (rₖ) of the bending surface area F, the number of uncoated portions intersecting the imaginary straight line (Lₖ) may be defined as a stack number of an uncoated portion at the corresponding point. When the imaginary straight line (Lₖ) intersects the folded end portion 61a, the stack number of the uncoated portion increases only by 1. The stack number of the uncoated portion at the point (rₖ) illustrated in FIG. 6 is 6.

In the bending surface area F, the stack number of the uncoated portion gradually increases from the outer circumference toward the core, and when it reaches a predetermined value, a radial region appears in which the stack number of the uncoated portion is uniformly maintained. The stack number uniform region (S₂) is a radial region of the electrode assembly JR in which the stack number of the uncoated portion is substantially the same. 'Substantially the same' includes a case in which a deviation of less than 10% is exhibited.

The bending surface area F may include a stack number increase region (S₁) and a stack number uniform region (S₂). The stack number increase region (S₁) is located close to the outer circumference of the electrode assembly JR. The stack number uniform region (S₂) is located between the stack number increase region (S₁) and the core C of the electrode assembly JR. The length of the stack number uniform region (S₂) is greater than the length of the stack number increase region (S₁).

In the example of FIG. 10c, in the stack number increase region (S₁), the stack number of the uncoated portion increases from 1 to 13. In the stack number uniform region (S₂), the stack number of the uncoated portion is maintained as 13. The stack number of the uncoated portion in the stack number uniform region (S₂) may increase to more than 13 when the lengths of the segment 61 and the end-folded segment 61' increase.

Since the stack number of the uncoated portion in the stack number uniform region (S₂) is larger than that in the stack number increase region (S₁), the electrolyte impregnation speed is slow. Therefore, the number of end-folded segments 61' included in the stack number uniform region (S₂) may be greater than the number of end-folded segments 61' included in the stack number increase region (S₁). Alternatively, the number of folds of the folded end portion 61a included in the stack number uniform region (S₂) may be greater than the number of folds of the folded end portion 61a included in the stack number increase region (S₁). In this case, the electrolyte impregnation speed of the stack number uniform region (S₂) having a slow electrolyte impregnation speed may be improved.

Referring to FIGS. 4 and 5 again, in order to prevent the active material layer 42 and/or the insulating coating layer 44 from being damaged during bending of the uncoated portion 43, it is preferable to provide a predetermined gap between the bottom of the cut groove between the segments 61 and the active material layer 42. This is because stress is concentrated near the bottom of the cut groove 63 when the uncoated portion 43 is bent. The gap may be varied along the winding direction of the electrode 60. The gap is 0.2 mm to 4 mm, preferably 1.5 mm to 2.5 mm. If the gap is adjusted within the corresponding numerical range, it is possible to prevent the active material layer 42 and/or the insulating coating layer 44 from being damaged near the bottom of the cut groove 63 by the stress generated during bending of the uncoated portion 43. The gap may prevent the active material layer 42 and/or the insulating coating layer 44 from being damaged due to tolerance during notching or cutting of the segment 61.

The lower end of the cut groove 63 and the insulating coating layer 44 may be spaced apart by 0.5 mm to 2.0 mm. When the electrode 60 is wound, the end of the insulating coating layer 44 in the winding axis Y direction may be located in the range of -2 mm to 2 mm along the winding axis direction based on the end of the separator. The insulating coating layer 44 may prevent a short circuit between two electrodes having different polarities and facing each other with a separator interposed therebetween, and may support a bending point when the segment 61 is bent. In order to improve the short circuit prevention effect between the two electrodes, the insulating coating layer 44 may be exposed to the outside of the separator. In addition, in order to further maximize the effect of preventing a short circuit between the two electrodes, the width of the insulating coating layer 44 may be increased so that the end of the insulating coating layer 44 in the winding axis Y direction is located above the lower end of the cut groove 63. In one embodiment, the end of the insulating coating layer 44 in the winding axis direction may be located within a range of -2 mm to +2 mm based on the lower end of the cut groove 63. The thickness of the insulating coating layer 44 may be smaller than the thickness of the active material layer 42. In this case, a gap may exist between the surface of the insulating coating layer 44 and the separator.

The plurality of segments 61 may form a plurality of segment groups going from the core to the outer circumference. At least one of the width, height, and separation pitch of segments belonging to the same segment group may be substantially the same. Preferably, the width, height, and separation pitch of the segments belonging to the same segment group may be substantially the same.

The width of the segment 61 roughly corresponds to the width of the lower end. The width of the segment 61 may be from 1 mm to 11 m. The width of the segment 61 may increase stepwise or gradually as the radius r of the winding turn increases.

The height of the segment 61 corresponds approximately to the shortest distance between the upper end and the lower end. The height of the segment 61 may be 2 mm to 10 mm. The height of the segment 61 may increase stepwise or gradually along the radial direction of the electrode assembly.

The separation pitch (P) of the segment 61 corresponds to the distance between two points where a straight line passing through the lower end of the cut groove in the winding direction intersects two straight lines extending the side edges of the segment 61 at both sides of the cut groove. The separation pitch (P) of the segment 61 may be 0.05 mm to 1 mm.

When the segment 61 is approximated by a trapezoid, the lower internal angle of the trapezoid may increase gradually or stepwise from the core to the outer circumference. If the radius of the electrode assembly increases, the radius of curvature increases. If the lower internal angle (θ) of the segment 61 increases as the radius of the electrode assembly increases, the stress generated in the radial direction and the circumferential direction when the segment 61 is bent may be relieved. In addition, if the lower internal angle (θ) increases, when the segment 61 is bent, the area overlapping with the segment 61 at the inner side and the number of overlapping layers also increase, so that welding strength may be uniformly secured in the radial direction and the circumferential direction and the bending surface area may be formed flat.

The width (d_{B1}) of the first portion B1 is designed so that the core of the electrode assembly is open to the outside by 50% or more, 60% or more, 70% or more, 80% or more, or 90% or more based on its diameter when the segment 61 of the third portion B2 is bent toward the core.

In one embodiment, the width of each segment group may be designed for each segment group to constitute the same winding turn of the electrode assembly. Here, the winding turn may be counted based on the end of the first portion B1 when the electrode 60 is in a wound state.

In another modification, the width of each segment group may be designed for each segment group to constitute at least one winding turn of the electrode assembly.

In still another modification, the width and/or height and/or separation pitch of the segments 61 belonging to the same segment group may be increased or decreased gradually and/or stepwise and/or irregularly within the group or between the adjacent groups.

When the number of segment groups is one, the height of the segments 61 in the third portion B2 may be uniform.

The segment structure of the third portion B2 may extend to the second portion B3. In this case, the second portion B3 may also include a plurality of segments, like the third portion B2. Preferably, the segment structure of the second portion B3 may be substantially the same as that of the outermost segment group of the third portion B2. In this case, the segments included in the second portion B3 and the third portion B2 may have substantially the same width, height, and separation pitch. In a modified example, the segments of the second portion B3 may have a width and/or height and/or separation pitch greater than that of the third portion B2.

The structure of the electrode 60 described above may be applied to at least one of the first electrode and the second electrode having different polarities included in the electrode assembly having a jelly-roll structure. In addition, when the electrode structure of the above embodiments (modifications) is applied to any one of the first electrode and the second electrode, the conventional electrode structure may be applied to the other one. In addition, the electrode structures applied to the first electrode and the second electrode may not be identical but be different from each other.

For example, when the first electrode and the second electrode are a positive electrode and a negative electrode, respectively, any one of the above embodiments (modifications) may be applied to the first electrode and the conventional electrode structure (see FIG. 1) may be applied to the second electrode.

As another example, when the first electrode and the second electrode are a positive electrode and a negative electrode, respectively, any one of the above embodiments (modifications) may be selectively applied to the first electrode and another one of the above embodiments (modifications) may be selectively applied to the second electrode.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula A[AₓM_{y}]O_{2+z} (A includes at least one element among Li, Na and K; M includes at least one element selected from Ni, Co, Mn, Ca, Mg, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; and the stoichiometric coefficients x, y, z and M are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Mg, and Al; M² includes at least one element selected from Ti, Si, Mn, Co, Fe, Cr, Mo, Ni, Nd, Mg, Al, As, Sb, Si, Ge, V, and S; M³ includes a halogen element optionally including F; 0 < a ≤ 2, 0 ≤ x ≤ 1, 0 ≤ y < 1, 0 ≤ z < 1; the stoichiometric coefficient a, x, y, and z are selected so that the compound maintains electrical neutrality), or Li₃M₂(PO₄)₃ [M includes at least one element selected from Ti, Si, Mn, Fe, Co, V, Cr, Mo, Ni, Mg, and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

Hereinafter, the structure of the electrode assembly according to an embodiment of the present disclosure will be described in detail.

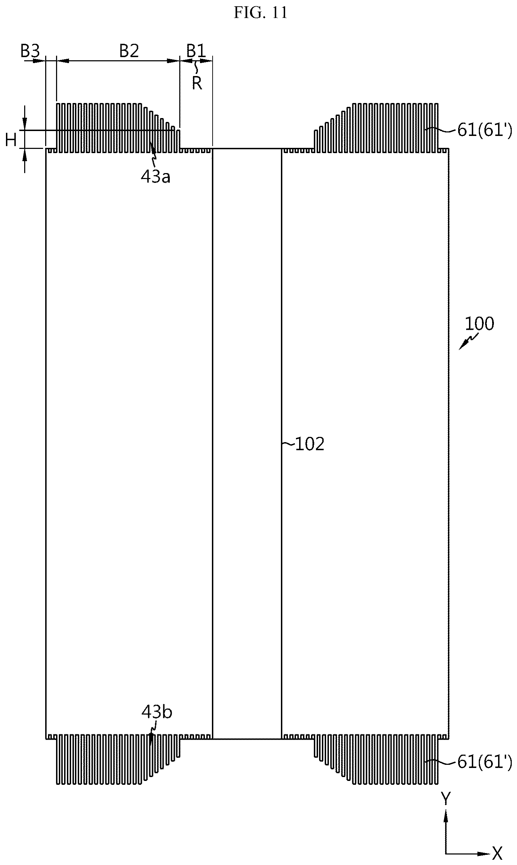

FIG. 11 is a cross-sectional view of a jelly-roll type electrode assembly 100 in which the electrode 60 according to an embodiment is applied to a first electrode (positive electrode) and a second electrode (negative electrode), taken along the winding axis direction Y.

Referring to FIG. 11, the uncoated portion 43a of the first electrode includes a first portion B1 adjacent to the core of the electrode assembly 100, a second portion B3 adjacent to the outer circumferential surface of the electrode assembly 100, and a third portion B2 interposed between the first portion B1 and the second portion B3.

The height of the uncoated portion of the first portion B1 is lower than that of the segment 61 and the end-folded segment 61' included in the third portion B2. Therefore, when the segment 61 and the end-folded segment 61' included in the third portion B2 are folded, the uncoated portion of the first portion B1 is not folded.

In the third portion B2, the bending length H of the segment 61 or the end-folded segment 61 closest to the core 102 is equal to or smaller than the radial length (R) of the first portion B1. Therefore, even if the segment 61 and the end-folded segment 61 included in the third portion B2 are folded, the core 102 is opened to the outside. If the core 102 is not closed, there is no difficulty in the electrolyte injection process, and the electrolyte injection efficiency is improved. In addition, the process of welding the current collection plate may be easily performed by inserting a welding jig through the core 102.

The length of the second portion B3 may be shorter than the length of the first portion B1. The height of the uncoated portion of the second portion B3 is lower than that of the segment 61 and the end-folded segment 61' included in the third portion B2. Therefore, a phenomenon in which an internal short circuit occurs as the beading portion of the battery housing and the upper edge of the electrode assembly 100 come into contact with each other during the process in which the beading portion of the battery housing is pressed near the winding turn of the second portion B3 may be prevented. The uncoated portion of the second portion B3 is not folded when the segment 61 and the end-folded segment 61' included in the third portion B2 are folded.

The second uncoated portion 43b has the same structure as the first uncoated portion 43a. In one modification, the second uncoated portion 43b may have a conventional electrode structure or the electrode structure in other embodiments (modifications).

The plurality of segments 61 and the plurality of end-folded segments 61' included in the third portion B2 of the first uncoated portion 43a and the second uncoated portion 43b may be folded toward the core 102 of the electrode assembly 100 to form a bending surface area F (FIG. 10a). When the bending surface area F is formed, the end-folded segment 61' may be interposed between the segments 61 adjacent in the radial direction of the electrode assembly 100 so that the folded end portion 61a forms a gap G (FIG. 10c) to provide an electrolyte impregnation path.

The electrode assembly according to an embodiment of the present disclosure may be applied to a jelly-roll type cylindrical battery.

Preferably, the cylindrical battery may be, for example, a cylindrical battery whose form factor ratio (defined as a value obtained by dividing the diameter of the cylindrical battery by height, namely a ratio of diameter (Φ) to height H) is greater than about 0.4. Here, the form factor means a value indicating the diameter and height of a cylindrical battery.

The cylindrical battery may have a diameter of 35 mm or more, preferably 40 mm to 50 mm. The cylindrical battery may have a height of 70 mm or more, preferably, 75 mm to 90 mm. The cylindrical battery according to an embodiment of the present disclosure may be, for example, 46110 battery, 4875 battery, 48110 battery, 4880 battery, or 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collection plate to the bending surface area of the uncoated portion, it is necessary to sufficiently increase the number of stacked layers of the uncoated portion in the bending surface area in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.436.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

The present disclosure is not limited by the form factor ratio described above and the diameter and height of the cylindrical battery. Therefore, the present disclosure may also be applied to batteries having a form factor ratio of about 0.4 or less, for example 1865 batteries, 2170 batteries, etc.

Hereinafter, the cylindrical battery according to an embodiment of the present disclosure will be described in detail.

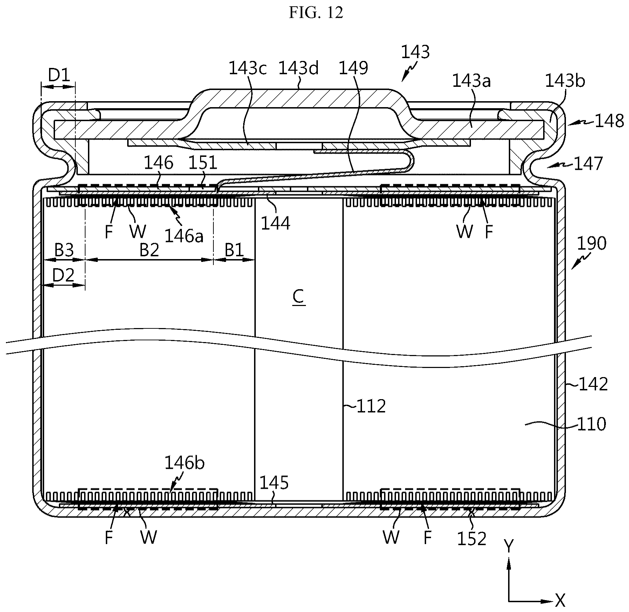

FIG. 12 is a cross-sectional view showing a cylindrical battery 190 according to an embodiment of the present disclosure, taken along the winding axis direction Y.

Referring to FIG. 12, the cylindrical battery 190 according to an embodiment of the present disclosure includes an electrode assembly 110 having a first electrode, a separator and a second electrode, a battery housing 142 for accommodating the electrode assembly 110, and a sealing body 143 for sealing an open end of the battery housing 142.

The battery housing 142 is a cylindrical container with an opening at the top. The battery housing 142 is made of a conductive metal material such as aluminum, steel or stainless steel. A nickel coating layer may be formed on the surface of the battery housing 142. The battery housing 142 accommodates the electrode assembly 110 in the inner space through the top opening and also accommodates the electrolyte.

The electrolyte may be a salt having a structure like A⁺B⁻. Here, A⁺ includes an alkali metal cation such as Li⁺, Na⁺, or K⁺, or a combination thereof. and B⁻ includes at least one anion selected from the group consisting of F⁻, Cl⁻, Br⁻, I⁻, NO₃⁻, N(CN)₂, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The electrode assembly 110 may have a jelly-roll shape. The electrode assembly 110 may be manufactured by winding a laminate formed by sequentially laminating a lower separator, a first electrode, an upper separator, and a second electrode at least once, as shown in FIG. 2.

The first electrode and the second electrode have different polarities. That is, if one has positive polarity, the other has negative polarity. At least one of the first electrode and the second electrode may have an electrode structure according to the above embodiments (modifications). In addition, the other of the first electrode and the second electrode may have a conventional electrode structure or an electrode structure according to embodiments (modifications). The electrode pair included in the electrode assembly 110 is not limited to one electrode pair, two or more electrode pairs may be included.

The electrode assembly 110 may include bending surface areas F (FIG. 10a) on the upper and lower portions. The first current collection plate 144 may be welded to the bending surface area F of the first uncoated portion 146a, and the second current collection plate 145 may be welded to the bending surface area F of the second uncoated portion 146b.

Preferably, 50% or more of the welding area W of the first current collection plate 144 and the second current collection plate 145 may overlap with the stack number uniform region S2 (FIG. 10c) of the bending surface area F. Optionally, the remaining region of the welding area W may overlap with the stack number increase region S1 (FIG. 10c) of the bending surface area F. In terms of high welding strength, low resistance of the welding interface, and prevention of damage to the separator or active material layer, it is preferable that the entire welding area W overlaps with the stack number uniform region S2 (FIG. 10c).

The core 112 of the electrode assembly 110 is not closed by the bending surface area F. Therefore, there is no difficulty in the electrolyte injection process, and the welding process between the second current collection plate 145 and the battery housing 142 may be easily performed by inserting a welding jig through the core 112.

If the width and/or height and/or separation pitch of the segments are adjusted to satisfy the numerical range of the above-described embodiment, as shown in FIG. 10c, when the segments are bent, the segments overlap at least 10 times or more to sufficiently secure welding strength and do not form an empty space (gap) in the bending surface area F.

The sealing body 143 may include a cap plate 143a, a first gasket 143b for providing airtightness between the cap plate 143a and the battery housing 142 and having insulation, and a connection plate 143c electrically and mechanically coupled to the cap plate 143a.

The cap plate 143a is a component made of a conductive metal material, and covers the top opening of the battery housing 142. The cap plate 143a is electrically connected to the bending surface area F of the first electrode, and is electrically insulated from the battery housing 142 by means of the first gasket 143b. Accordingly, the cap plate 143a may function as the first electrode (for example, positive electrode) of the cylindrical battery 190.

The cap plate 143a is placed on the beading portion 147 formed on the battery housing 142, and is fixed by a crimping portion 148. Between the cap plate 143a and the crimping portion 148, the first gasket 143b may be interposed to secure the airtightness of the battery housing 142 and the electrical insulation between the battery housing 142 and the cap plate 143a. The cap plate 143a may have a protrusion 143d protruding upward from the center thereof.

The battery housing 142 is electrically connected to the bending surface area F of the second electrode. Therefore, the battery housing 142 has the same polarity as the second electrode. If the second electrode has negative polarity, the battery housing 142 also has negative polarity.

The battery housing 142 includes the beading portion 147 and the crimping portion 148 at the top thereof. The beading portion 147 is formed by pressing inward the periphery of the outer circumferential surface of the battery housing 142. The beading portion 147 prevents the electrode assembly 110 accommodated inside the battery housing 142 from escaping through the top opening of the battery housing 142, and may function as a support portion on which the sealing body 143 is placed.

The second portion B3 of the first electrode includes no segment, and the uncoated portion of the second portion B3 has a lower height than the third portion B2. Therefore, the winding turns of the second portion B3 are not substantially affected even when the battery housing 142 is pressed inward at the outside to form the beading portion 147. Therefore, the winding turns of the second portion B3 are not pressed by other components such as the beading portion 147. By doing so, partial shape deformation of the electrode assembly 110 is prevented, thereby preventing a short circuit inside the cylindrical battery 190.

Preferably, when the inward-pressing depth of the beading portion 147 is defined as D1 and the radial length from the inner circumference of the battery housing 142 to the boundary point between the second portion B3 and the third portion B2 is defined as D2, the relational expression D1 ≤ D2 may be satisfied. In this case, when pressing inward the battery housing 142 to form the beading portion 147, it is possible to substantially prevent the winding turns of the second portion B3 from being damaged.

The crimping portion 148 is formed on the beading portion 147. The crimping portion 148 has an extended and bent shape to cover the outer circumference of the cap plate 143a disposed on the beading portion 147 and a part of the upper surface of the cap plate 143a.

The cylindrical battery 190 may further include a first current collection plate 144 and/or a second current collection plate 145 and/or an insulator 146.

The first current collection plate 144 is coupled to the upper portion of the electrode assembly 110. The first current collection plate 144 is made of a conductive metal material such as aluminum, copper, steel, nickel and so on, and is electrically connected to the bending surface area F of the first electrode. The electric connection may be made by welding. A lead 149 may be connected to the first current collection plate 144. The lead 149 may extend upward above the electrode assembly 110 and be coupled to the connection plate 143c or directly coupled to the lower surface of the cap plate 143a. The lead 149 may be connected to other components by welding.

Preferably, the first current collection plate 144 may be integrally formed with the lead 149. In this case, the lead 149 may have an elongated plate shape extending outward from near the center or edge of the first current collection plate 144.

The first current collection plate 144 and the bending surface area F of the first electrode may be coupled by, for example, laser welding. Laser welding may be performed by partially melting a base material of the current collection plate. In one modification, the first current collection plate 144 and the bending surface area F may be welded with a solder interposed therebetween. In this case, the solder may have a lower melting point compared to the first current collection plate 144 and the first uncoated portion 146a. The laser welding may be replaced with resistance welding, ultrasonic welding, spot welding, or the like.

The second current collection plate 145 may be coupled to the lower surface of the electrode assembly 110. One side of the second current collection plate 145 may be coupled by welding to the bending surface area F of the second electrode, and the other side may be coupled to the inner bottom surface of the battery housing 142 by welding. The coupling structure between the second current collection plate 145 and the bending surface area F of the second electrode may be substantially the same as the coupling structure between the first current collection plate 144 and the bending surface area F of the first electrode.

The insulator 146 may cover the first current collection plate 144. The insulator 146 may cover the first current collection plate 144 at the upper surface of the first current collection plate 144, thereby preventing direct contact between the first current collection plate 144 and the inner circumference of the battery housing 142.

The insulator 146 has a lead hole 151 so that the lead 149 extending upward from the first current collection plate 144 may be withdrawn therethrough. The lead 149 is drawn upward through the lead hole 151 and coupled to the lower surface of the connection plate 143c or the lower surface of the cap plate 143a.

A peripheral region of the edge of the insulator 146 may be interposed between the first current collection plate 144 and the beading portion 147 to fix the coupled body of the electrode assembly 110 and the first current collection plate 144. Accordingly, the movement of the coupled body of the electrode assembly 110 and the first current collection plate 144 may be restricted in the height direction Y of the battery 190, thereby improving the assembly stability of the battery 190.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside. The internal pressure at which the venting portion 152 is ruptured may be approximately 15 kgf/cm² to 35 kgf/cm².

The venting portion 152 may be formed continuously or discontinuously while drawing a circle at the lower surface of the battery housing 142. In one modification, the venting portion 152 may be formed in a straight pattern or other patterns.

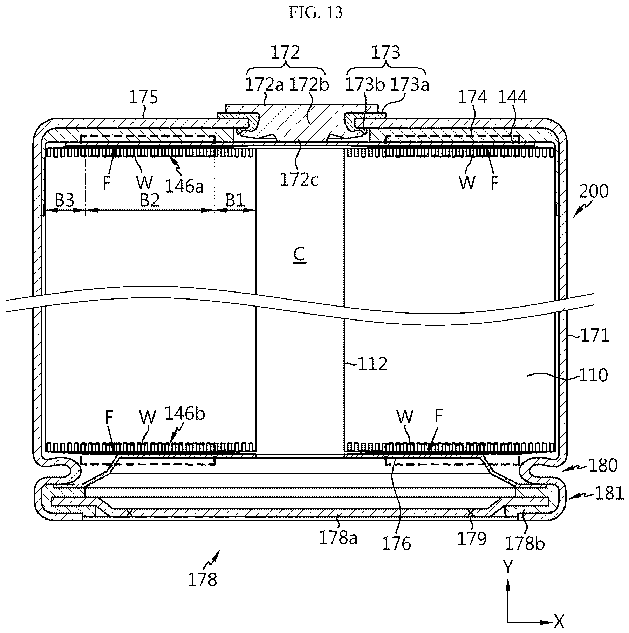

FIG. 13 is a cross-sectional view showing a cylindrical battery 200 according to an embodiment of the present disclosure, taken along the winding axis direction Y.

Referring to FIG. 13, the structure of the electrode assembly of the cylindrical battery 200 is substantially the same as that of the cylindrical battery 190 of in FIG. 12, and the other structure except for the electrode assembly is changed.

Specifically, the cylindrical battery 200 includes a battery housing 171 through which a rivet terminal 172 is installed. The rivet terminal 172 is installed through a perforation hole formed in the closed end of the battery housing 171. The rivet terminal 172 is riveted to the perforation hole of the battery housing 171 in a state where a second gasket 173 made of an insulating material is interposed therebetween. The rivet terminal 172 is exposed to the outside in a direction opposite to the direction of gravity.

The rivet terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed end of the battery housing 171. The maximum diameter of the terminal exposing portion 172a may be larger than the maximum diameter of the perforation hole formed in the battery housing 171. The terminal insert portion 172b may be electrically connected to the uncoated portion 146a of the first electrode through approximately the central portion of the closed end of the battery housing 171. The lower edge of the terminal insert portion 172b may be riveted onto the inner surface of the battery housing 171. That is, the lower edge of the terminal insert portion 172b may have a shape curved toward the inner surface of the battery housing 171. A flat portion 172c is included at the inner side of the lower edge of the terminal insert portion 172b. The maximum diameter of the lower portion of the riveted terminal insert portion 172b may be larger than the maximum diameter of the perforation hole of the battery housing 171.

The flat portion 172c of the terminal insert portion 172b may be welded to the center portion of the first current collection plate 144 connected to the bending surface area F of the first electrode. The welding may be replaced with other welding methods such as ultrasonic welding.

An insulator 174 made of an insulating material may be interposed between the first current collection plate 144 and the inner surface of the battery housing 171. The insulator 174 covers the upper portion of the first current collection plate 144 and the top edge of the electrode assembly 110. Accordingly, it is possible to prevent the second portion B3 of the electrode assembly 110 from contacting the inner surface of the battery housing 171 having a different polarity to cause a short circuit.

The thickness of the insulator 174 corresponds to or is slightly greater than the distance between the upper surface of the first current collection plate 144 and the inner surface of the closed portion of the battery housing 171. Accordingly, the insulator 174 may contact the upper surface of the first current collection plate 144 and the inner surface of the closed portion of the battery housing 171.

The terminal insert portion 172b of the rivet terminal 172 may be welded to the first current collection plate 144 through the perforation hole of the insulator 174. A diameter of the perforation hole formed in the insulator 174 may be larger than a diameter of the riveting portion at the lower end of the terminal insert portion 172b. Preferably, the perforation hole may expose the lower portion of the terminal insert portion 172b and the second gasket 173.

The second gasket 173 is interposed between the battery housing 171 and the rivet terminal 172 to prevent the battery housing 171 and the rivet terminal 172 having opposite polarities from electrically contacting each other. Accordingly, the upper surface of the battery housing 171 having an approximately flat shape may function as the second electrode (for example, negative electrode) of the cylindrical battery 200.

The second gasket 173 includes a gasket exposing portion 173a and a gasket insert portion 173b. The gasket exposing portion 173a is interposed between the terminal exposing portion 172a of the rivet terminal 172 and the battery housing 171. The gasket insert portion 173b is interposed between the terminal insert portion 172b of the rivet terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation property.

The gasket exposing portion 173a of the second gasket 173 may have an extended shape to cover the outer circumference of the terminal exposing portion 172a of the rivet terminal 172. When the second gasket 173 covers the outer circumference of the rivet terminal 172, it is possible to prevent a short circuit from occurring while an electrical connection part such as a bus bar is coupled to the upper surface of the battery housing 171 and/or the rivet terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the rivet terminal 172 by thermal fusion. In this case, airtightness at the coupling interface between the second gasket 173 and the rivet terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the rivet terminal 172 may be integrally coupled with the second gasket 173 by insert injection molding.

In the upper surface of the battery housing 171, a remaining area 175 other than the area occupied by the rivet terminal 172 and the second gasket 173 corresponds to the second electrode terminal having a polarity opposite to that of the rivet terminal 172.

The second current collection plate 176 is coupled to the lower portion of the electrode assembly 110. The second current collection plate 176 is made of a conductive metal material such as aluminum, steel, copper or nickel, and is electrically connected to the bending surface area F of the second electrode.

Preferably, the second current collection plate 176 is electrically connected to the battery housing 171. To this end, at least a part of the edge of the second current collection plate 176 may be interposed and fixed between the inner surface of the battery housing 171 and a first gasket 178b. In one example, at least a part of the edge of the second current collection plate 176 may be fixed to the beading portion 180 by welding in a state of being supported on the lower surface of the beading portion 180 formed at the bottom of the battery housing 171. In one modification, at least a part of the edge of the second current collection plate 176 may be directly welded to the inner wall surface of the battery housing 171.

Preferably, the second current collection plate 176 and the bending surface area F of the second electrode may be coupled by welding, for example laser welding. In addition, the welding region of the second current collection plate 176 and the bending surface area F may be spaced apart by a predetermined interval toward the core C based on the inner circumference of the beading portion 180.

A sealing body 178 for sealing the lower open end of the battery housing 171 includes a cap plate 178a and a first gasket 178b. The first gasket 178b electrically separates the cap plate 178a and the battery housing 171. A crimping portion 181 fixes the edge of the cap plate 178a and the first gasket 178b together. The cap plate 178a has a venting portion 179. The configuration of the venting portion 179 is substantially the same as the above embodiment (modification). The lower surface of the cap plate 178a may be located above the lower end of the crimping portion 181. In this case, a space is formed under the cap plate 178a to smoothly perform venting. In particular, it is useful when the cylindrical battery 200 is installed so that the crimping portion 181 faces the direction of gravity.

Preferably, the cap plate 178a is made of a conductive metal material. However, since the first gasket 178b is interposed between the cap plate 178a and the battery housing 171, the cap plate 178a may not have electrical polarity. The sealing body 178 seals the open end of the lower portion of the battery housing 171 and mainly functions to discharge gas when the internal pressure of the battery 200 increases over a critical value. A threshold value of the pressure is 15 kgf/cm² to 35 kgf/cm².

Meanwhile, in a modified example, the battery housing 171 may not include the beading portion 180 and the crimping portion 181. In this case, the sidewall of the battery housing 171 may extend in a straight line, and the edge of the cap plate 178a may be directly coupled to the open end of the battery housing 171. The edge of the cap plate 178a may be welded to the open end of the battery housing 171. In this modified example, the first gasket 178b may be omitted.

In one modified example, at least a part of the second current collection plate 176, for example an edge portion, may be coupled to the cap plate 178a.

In another modified example, at least a part of the second current collection plate 176, for example an edge portion, may be bent to face the inner surface of the sidewall of the battery housing 171, and the bent portion may be coupled to the inner surface of the sidewall of the battery housing 171 by welding.

In still another modified example, the edge of the cap plate 178a, the open end of the battery housing 171, and the edge portion of the second current collection plate 176 may be integrally coupled by welding.

In still another modified example, the inner region of an edge portion of the cap plate 178a may be directly welded to the bending surface area F of the second electrode. In this case, the cap plate 178a functions to electrically connect the second electrode and the battery housing 171, so the second current collection plate 176 may be omitted.

Preferably, the rivet terminal 172 electrically connected to the bending surface area F of the first electrode is used as the first electrode terminal. In addition, in the upper surface of the battery housing 171 electrically connected to the second uncoated portion 146b of the second electrode through the second current collection plate 176, a part 175 except for the rivet terminal 172 is used as the second electrode terminal having a different polarity from the first electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the second electrode terminal has an approximately flat shape, a sufficient connection area may be secured for connecting electrical connection components such as bus bars. Accordingly, the cylindrical battery 200 may reduce the resistance at the connection portion of the electrical connection components to a desirable level.

The cylindrical battery described above may be used to manufacture a battery pack.

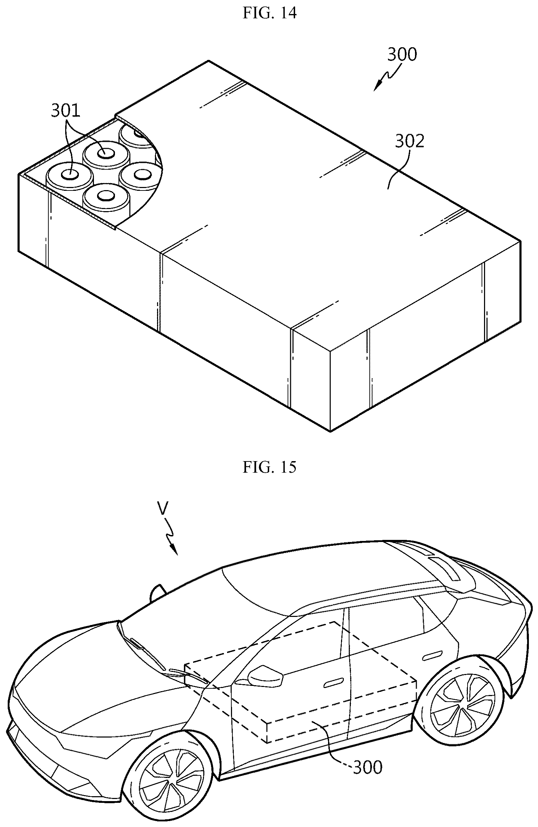

FIG. 14 is a diagram schematically showing a battery pack according to an embodiment of the present disclosure.

Referring to FIG. 14, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries according to the above embodiments (modifications). In the drawing, components such as a bus bar for electrical connection of the cylindrical batteries 301, a cooling unit, and an external terminal are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 15 is a diagram schematically showing a vehicle including the battery pack 300 of FIG. 14.

Referring to FIG. 15, a vehicle V according to an embodiment of the present disclosure includes the battery pack 300 according to an embodiment of the present disclosure. The vehicle V operates by receiving power from the battery pack 300 according to an embodiment of the present disclosure.

According to the present disclosure, by improving the end structure of the segments, gaps used as paths for electrolyte impregnation may be formed in the bending surface area formed by bending the segments in the radial and/or circumferential direction, thereby shortening the impregnation time of the electrolyte.

According to another aspect of the present disclosure, by improving the structure of the uncoated portion of the electrode assembly so that the electrode assembly and the inner circumference of the battery housing do not interfere in the process of forming the beading portion of the battery housing, it is possible to prevent a short circuit from occurring inside the cylindrical battery due to partial deformation of the electrode assembly.

According to still another aspect of the present disclosure, an electrode assembly having improved energy density and reduced resistance may be provided by applying a structure in which a current collection plate is welded to a broad area of the bending surface area formed by bending the segments.

According to still another aspect of the present disclosure, by improving the structure of the uncoated portion adjacent to the core of the electrode assembly, the cavity in the core of the electrode assembly is prevented from being blocked when the uncoated portion is bent, so that the electrolyte injection process and the process of welding the battery housing (or, rivet terminal) and the current collection plate may be easily performed.

According to still another aspect of the present disclosure, it is possible to provide a cylindrical battery having a structure in which electrolyte impregnation is improved, the internal resistance is low, an internal short circuit is prevented, and the welding strength between the current collection plate and the uncoated portion is improved, and a battery pack and a vehicle including the cylindrical battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrode assembly in which a first electrode, a second electrode, and a separator interposed therebetween are wound around one axis to define a core and an outer circumference,
wherein at least one of the first electrode and the second electrode includes an uncoated portion extending in a winding direction along a long side end thereof,
wherein the uncoated portion includes a plurality of segments separated by cut grooves formed along the winding direction and independently bendable,
wherein the plurality of segments are bent toward the core to form a bending surface area at one end of the electrode assembly, and
wherein at least some of the plurality of segments include a folded end portion.

2. The electrode assembly according to claim 1,
wherein when a segment including the folded end portion is defined as an end-folded segment, the bending surface area includes a plurality of end-folded segments, and
wherein when the number of uncoated portions intersecting an imaginary straight line passing through a center of the folded end portion is defined as the number of folds of the folded end portion, the folded end portion has the number of folds of 2 or more and forms a gap between segments adjacent in a radial direction of the electrode assembly.

3. The electrode assembly according to claim 2,
wherein the gap has a separation distance corresponding to a thickness of the folded end portion between the segments adjacent in the radial direction of the electrode assembly.

4. The electrode assembly according to claim 2,
wherein the plurality of end-folded segments are arranged in a regular or irregular pattern along the radial direction or a circumferential direction of the electrode assembly on the bending surface area.

5. The electrode assembly according to claim 2,
wherein the bending surface area includes a radial region in which the number of end-folded segments arranged in a circumferential direction increases stepwise or gradually from the core to the outer circumference.

6. The electrode assembly according to claim 2,
wherein the bending surface area includes a radial region in which the number of folds of the folded end portion increases stepwise or gradually from the core to the outer circumference.

7. The electrode assembly according to claim 2,
wherein the bending surface area includes a radial region in which the number of folds of the folded end portion is maintained uniform from the core to the outer circumference.

8. The electrode assembly according to claim 2,
wherein heights of the plurality of end-folded segments increase stepwise from the core to the outer circumference of the electrode assembly, and
wherein the bending surface area includes a radial region in which the number of folds of the folded end portion also increases as the height of the end-folded segment increases.

9. The electrode assembly according to claim 2,
wherein the bending surface area includes a radial region in which a width of the uncoated portion in the one axis direction forming the folded end portion increases stepwise or gradually from the core to the outer circumference of the electrode assembly.

10. The electrode assembly according to claim 2,
wherein when the number of uncoated portions intersecting an imaginary line passing through the bending surface area in parallel with the one axis direction at any point of the bending surface area is defined as a stack number of an uncoated portion at the corresponding point, the bending surface area includes a stack number increase region and a stack number uniform region from the outer circumference to the core of the electrode assembly, and
wherein the number of end-folded segments included in the stack number increase region is greater than the number of end-folded segments included in the stack number uniform region.

11. The electrode assembly according to claim 2,
wherein when the number of uncoated portions intersecting an imaginary line passing through the bending surface area in parallel with the one axis direction at any point of the bending surface area is defined as a stack number of an uncoated portion at the corresponding point, the bending surface area includes a stack number increase region and a stack number uniform region from the outer circumference to the core of the electrode assembly, and
wherein the number of folds of the folded end portion included in the stack number uniform region is greater than the number of folds of the folded end portion included in the stack number increase region.

12. The electrode assembly according to claim 1,
wherein the folded end portion has a structure folded in a jelly-roll shape, a structure folded in a zigzag shape, or a structure folded randomly.

13. A cylindrical battery comprising:
the electrode assembly according to any one of claims 1 to 12;
a battery housing having an open end and a closed end and accommodating the electrode assembly through the open end, the battery housing being electrically connected to the second electrode of the electrode assembly;
a sealing body that seals the open end of the battery housing; and
a terminal electrically connected to the first electrode of the electrode assembly and having a surface exposed to an outside of the battery housing.

14. The cylindrical battery according to claim 13,
wherein the bending surface area is formed by bending the plurality of segments included in the uncoated portion of the first electrode, and
wherein the cylindrical battery further comprises a first current collection plate that electrically connects the bending surface area and the terminal.

15. The cylindrical battery according to claim 13,
wherein the terminal is installed in a perforation hole formed in the closed end of the battery housing to be insulated from the battery housing,
wherein the terminal includes a terminal exposing portion exposed through an outer surface of the closed end, and a terminal insert portion extending from the terminal exposing portion and inserted into the battery housing through the perforation hole, and
wherein a lower edge of the terminal insert portion is riveted toward an inner surface of the closed end.

16. The cylindrical battery according to claim 13,
wherein the sealing body includes a cap plate that seals the open end of the battery housing, and
wherein the terminal is the cap plate.

17. The cylindrical battery according to claim 13,
wherein the bending surface area is formed by bending the plurality of segments included in the uncoated portion of the second electrode, and
wherein the cylindrical battery further comprises a second current collection plate that electrically connects the bending surface area and a sidewall of the battery housing.

18. The cylindrical battery according to claim 17,
wherein the sealing body includes a cap plate covering the open end of the battery housing, and a gasket interposed between an edge of the cap plate and the open end, and
wherein an edge of the second current collection plate is interposed between the gasket and the sidewall of the battery housing.

19. The cylindrical battery according to claim 18,
wherein the battery housing includes a beading portion formed by pressing inward an outer circumference near the open end, and
wherein an edge of the cap plate is in contact with the beading portion.

20. The cylindrical battery according to claim 13,
wherein the sealing body includes a cap plate covering the open end of the battery housing, and
wherein an edge of the cap plate is coupled to the open end.

21. The cylindrical battery according to claim 20,
wherein at least a part of the cap plate is coupled to the bending surface area of the electrode assembly.

22. A battery pack comprising a plurality of cylindrical batteries according to any one of claims 13 to 21.

23. A vehicle comprising the battery pack according to claim 22.
